# EUROPEAN PATENT APPLICATION

(11) **EP 4 439 230 A1**
(43) Date of publication of application: **02.10.2024**
(21) Application number: 24166610.6
(22) Date of filing: 27.03.2024
(51) Int. Cl.: G06F 1/16, G06F 3/041, G06F 3/044

(54) **ELECTRONIC DEVICE**

(30) Priority: 30.03.2023 KR 20230041958; 20.06.2023 KR 20230078710
(71) Applicant: Samsung Display Co., Ltd., Yongin-si, Gyeonggi-do 17113 (KR)
(72) Inventor: KO, GWANG-BUM, 17113 Giheung-Gu, Yongin-si, Gyeonggi-Do (KR)
(74) Representative: Dr. Weitzel & Partner

(57) **Abstract**

Disclosed is an electronic device including include a display layer in which a display region, and a non-display region adjacent to the display region, are defined, and a sensor layer above the display layer for selectively operating in a first mode for sensing a touch, or in a second mode for sensing folding of the display layer and the sensor layer, and including first electrode groups arranged in a first direction, and second electrode groups arranged in a second direction crossing the first direction, crossing the first electrode groups, and including a first electrode and a second electrode.

## Description

### BACKGROUND

### 1. Field

Embodiments of the present invention described herein relate to an electronic device for sensing not only coordinates by an external input, but also for sensing folding and unfolding operations.

### 2. Description of the Related Art

Multimedia electronic devices, such as televisions, mobile phones, tablet computers, car navigation units, game machines, and the like, are equipped with electronic devices for displaying images. The electronic devices may include input sensors capable of providing touch-based input methods that enable users to intuitively input information or instructions in a suitable and simple manner, in addition to conventional input units such as buttons, keyboards, mouses, and the like.

### SUMMARY

The invention is defined by independent claim 1. Embodiments of the present invention provide an electronic device for sensing not only coordinates by an external input, but also for sensing folding and unfolding operations.

According to the invention, an electronic device includes a display layer in which a display region, and a non-display region adjacent to the display region, are defined, and a sensor layer above the display layer for selectively operating in a first mode for sensing a touch, or in a second mode for sensing folding of the display layer and the sensor layer, and including first electrode groups arranged in a first direction, and second electrode groups arranged in a second direction crossing the first direction, and crossing the first electrode groups, wherein each of the second electrode groups comprises a first electrode and a second electrode. The first electrode groups may each have a triangular shape or a rectangular shape.

The first electrode may include first electrode patterns arranged in the first direction, wherein the second electrode includes second electrode patterns arranged in the first direction, and wherein the first electrode patterns and the second electrode patterns are arranged such that at least one first electrode pattern and at least one second electrode pattern alternate with each other. The first electrode patterns and/or the second electrode patterns may each have a triangular shape. The first electrode groups, the first electrode patterns, and/or the second electrode patterns may each have a shape, in particular a triangular or rectangular shape, corresponding to a neighbored first electrode group, first electrode pattern, or second electrode pattern, in particular to form a mesh shape.

The sensor layer may further include a first trace line electrically connected to the first electrode patterns, and a second trace line electrically connected to the second electrode patterns, wherein at least a portion of the first trace line and a portion of the second trace line overlap the display region.

The at least the portion of the first trace line may have substantially a same length as the at least the portion of the second trace line.

The electronic device may further include a sensor driver configured to drive the sensor layer, and including an analog front end and an analog-to-digital converter.

In the first mode, the sensor driver may be configured to output a transmission signal to the first electrode groups, and the analog front end may be configured to output, to the analog-to-digital converter, a signal obtained by calculating a difference between a signal received from the first electrode and a signal received from the second electrode.

In the second mode, the sensor driver may be configured to output a transmission signal to at least some of the first electrode groups, one of the first electrode or the second electrode may be configured to output a signal to the analog front end, and an other one of the first electrode or the second electrode is grounded, the analog front end may be configured to output, to the analog-to-digital converter, the signal received from the one of the first electrode or the second electrode, and a second electrode in one of the second electrode groups that is not being driven for signal reception may be configured to be grounded or electrically floated.

The display layer and the sensor layer may be configured to be folded and unfolded about a folding axis extending in the second direction, wherein the first electrode groups include first-first electrode groups and first-second electrode groups spaced apart from each other with the folding axis therebetween, wherein, in the second mode the sensor driver is configured to output a transmission signal to at least some of the first-first electrode groups, at least some of the first-second electrode groups are configured to be grounded, and the analog front end is configured to output, to the analog-to-digital converter, a signal obtained by calculating a difference between a signal received from the first electrode and a signal received from the second electrode.

In the second mode, the sensor driver may be configured to output a transmission signal to at least some of the first electrode groups, the analog front end may be configured to output, to the analog-to-digital converter, a signal obtained by calculating a difference between signals received from one first electrode and an other first electrode in two adjacent ones of the second electrode groups, one second electrode of the two adjacent ones of the second electrode groups may be configured to be grounded, and an other second electrode of the two adjacent ones of the second electrode groups may be configured not to be grounded.

In the second mode, the first electrode groups may be configured to be grounded or floated, one of the first electrode or the second electrode may be configured to output a signal to the analog front end, an other one of the first electrode or the second electrode may be configured to be grounded, and the analog front end may be configured to output, to the analog-to-digital converter, the signal received from the one of the first electrode or the second electrode.

In the second mode, the first electrode groups may be configured to be grounded or floated, the analog front end may be configured to output, to the analog-to-digital converter, a signal obtained by calculating a difference between signals received from one first electrode and an other first electrode of two adjacent ones of the second electrode groups, one second electrode of the two adjacent ones of the second electrode groups may be configured to be grounded, and an other second electrode of the two adjacent ones of the second electrode groups may be configured not to be grounded.

The display layer and the sensor layer may be configured to be folded and unfolded about a folding axis extending in the second direction, wherein the first electrode groups include first-first electrode groups and first-second electrode groups spaced apart from each other with the folding axis therebetween, wherein, in the second mode, the sensor driver is configured to output a transmission signal to at least some of the second electrode groups, at least one first-first electrode group among the first-first electrode groups is configured to output a signal to the analog front end, the analog front end is configured to output, to the analog-to-digital converter, the signal received from the at least one first-first electrode group, and at least some of the first-second electrode groups are configured to be grounded.

The display layer and the sensor layer may be configured to be folded and unfolded about a folding axis extending in the second direction, wherein the first electrode groups include first-first electrode groups and first-second electrode groups spaced apart from each other with the folding axis therebetween, wherein, in the second mode, the sensor driver is configured to output a transmission signal to at least some of the second electrode groups, the analog front end is configured to output, to the analog-to-digital converter, a signal obtained by calculating a difference between signals received from two adjacent ones of the first-first electrode groups, and in a state in which the display layer and the sensor layer are folded, one of two adjacent ones of the first-second electrode groups configured to face the two adjacent ones of the first-first electrode groups is configured to be grounded, and an other one of the two adjacent ones of the first-second electrode groups is configured not to be grounded.

The display layer and the sensor layer may be configured to be folded and unfolded about a folding axis extending in the second direction, wherein the first electrode groups include first-first electrode groups and first-second electrode groups spaced apart from each other with the folding axis therebetween, wherein, in the second mode, the second electrode groups are configured to be grounded or floated, and one of the first-first electrode groups is configured to output a signal to the analog front end, and one of the first-second electrode groups configured to face the one of the first-first electrode groups is configured to be grounded.

The display layer and the sensor layer may be configured to be folded and unfolded about a folding axis extending in the second direction, wherein the first electrode groups include first-first electrode groups and first-second electrode groups spaced apart from each other with the folding axis therebetween, wherein, in the second mode, the second electrode groups are configured to be grounded or floated, the analog front end is configured to output, to the analog-to-digital converter, a signal obtained by calculating a difference between signals received from two adjacent ones of the first-first electrode groups, and in a state in which the display layer and the sensor layer are folded, one of two of the first-second electrode groups configured to face two adjacent ones of the first-first electrode groups is configured to be grounded, and an other of the two of the first-second electrode groups is configured not to be grounded.

According to one or more embodiments, an electronic device may include a display layer in which a display region, and a non-display region adjacent to the display region, are defined, a sensor layer above the display layer, configured to selectively operate in a first mode for sensing a touch or in a second mode for sensing folding of the display layer and the sensor layer, and including first electrode groups arranged in a first direction, and second electrode groups arranged in a second direction crossing the first direction, and configured to cross the first electrode groups, and a sensor driver configured to drive the sensor layer, and including first analog front ends that are configured to, in the first mode, receive two signals from the second electrode groups corresponding to the first analog front ends in a one-to-one correspondence, and output a signal obtained by calculating a difference between the two signals.

Each of the second electrode groups may include a first electrode including first electrode patterns arranged in the first direction, and a second electrode including second electrode patterns arranged in the first direction, the first electrode patterns and the second electrode patterns being arranged such that at least one first electrode pattern and at least one second electrode pattern alternate with each other, wherein the sensor driver further includes second analog front ends including single-ended analog front ends or differential analog front ends.

In the second mode, the second analog front ends may be configured to receive a signal from one of the first electrode or the second electrode, and an other one of the first electrode or the second electrode may be configured to be grounded.

In the second mode, the second analog front ends may be configured to receive signals provided from the first electrode and the second electrode.

In the second mode, the second analog front ends may be configured to receive signals from one first electrode and an other first electrode of two adjacent ones of the second electrode groups, one second electrode of the two adjacent ones of the second electrode groups may be configured to be grounded, and an other second electrode of the two adjacent ones of the second electrode groups may be configured not to be grounded.

### BRIEF DESCRIPTION OF THE DRAWINGS

The above and other aspects of the present invention will become apparent by describing in detail embodiments thereof with reference to the accompanying drawings.
FIG. 1A is a perspective view of an electronic device according to one or more embodiments of the present invention.
FIG. 1B is a perspective view of the electronic device according to one or more embodiments of the present invention.
FIG. 2 is a view for explaining an operation of the electronic device according to one or more embodiments of the present invention.
FIG. 3 is a sectional view of the electronic device according to one or more embodiments of the present invention.
FIG. 4 is a plan view of a display layer according to one or more embodiments of the present invention.
FIG. 5 is a plan view of a sensor layer according to one or more embodiments of the present invention.
FIG. 6 is a view for explaining an operation of the sensor layer according to one or more embodiments of the present invention.
FIG. 7A is a view for explaining an operation of the sensor layer according to one or more embodiments of the present invention.
FIG. 7B is a view for explaining an operation of the sensor layer according to one or more embodiments of the present invention.
FIG. 8A is a view for explaining an operation of the sensor layer according to one or more embodiments of the present invention.
FIG. 8B is a view for explaining an operation of the sensor layer according to one or more embodiments of the present invention.
FIG. 9A is a view for explaining an operation of the sensor layer according to one or more embodiments of the present invention.
FIG. 9B is a view for explaining an operation of the sensor layer according to one or more embodiments of the present invention.
FIG. 10A is a view for explaining an operation of the sensor layer according to one or more embodiments of the present invention.
FIG. 10B is a view for explaining an operation of the sensor layer according to one or more embodiments of the present invention.
FIG. 11A is a view for explaining an operation of the sensor layer according to one or more embodiments of the present invention.
FIG. 11B is a view for explaining an operation of the sensor layer according to one or more embodiments of the present invention.
FIG. 12A is a view for explaining an operation of the sensor layer according to one or more embodiments of the present invention.
FIG. 12B is a view for explaining an operation of the sensor layer according to one or more embodiments of the present invention.
FIG. 13A is a view for explaining an operation of the sensor layer according to one or more embodiments of the present invention.
FIG. 13B is a view for explaining an operation of the sensor layer according to one or more embodiments of the present invention.
FIG. 14A is a view for explaining an operation of the sensor layer according to one or more embodiments of the present invention.
FIG. 14B is a view for explaining an operation of the sensor layer according to one or more embodiments of the present invention.
FIG. 15A is a view for explaining an operation of the sensor layer according to one or more embodiments of the present invention.
FIG. 15B is a view for explaining an operation of the sensor layer according to one or more embodiments of the present invention.

### DETAILED DESCRIPTION

Aspects of some embodiments of the present invention and methods of accomplishing the same may be understood more readily by reference to the detailed description of embodiments and the accompanying drawings. The described embodiments are provided as examples so that this invention will be thorough and complete, and will fully convey the aspects of the present invention to those skilled in the art. Accordingly, processes, elements, and techniques that are redundant, that are unrelated or irrelevant to the description of the embodiments, or that are not necessary to those having ordinary skill in the art for a complete understanding of the aspects of the present invention may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present invention covers all modifications and replacements within the idea and technical scope of the present invention. Further, each of the features of the various embodiments of the present invention may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present invention. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from". The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. It will be understood that when an element or layer is referred to as being "between" two elements or layers, it can be the only element or layer between the two elements or layers, or one or more intervening elements or layers may also be present.

For the purposes of this invention, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present invention. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present invention. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present invention refers to "one or more embodiments of the present invention."

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present invention. In addition, in some embodiments, the block, unit and/or module may be physically combined into more complex blocks, units, and/or modules without departing from the scope of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

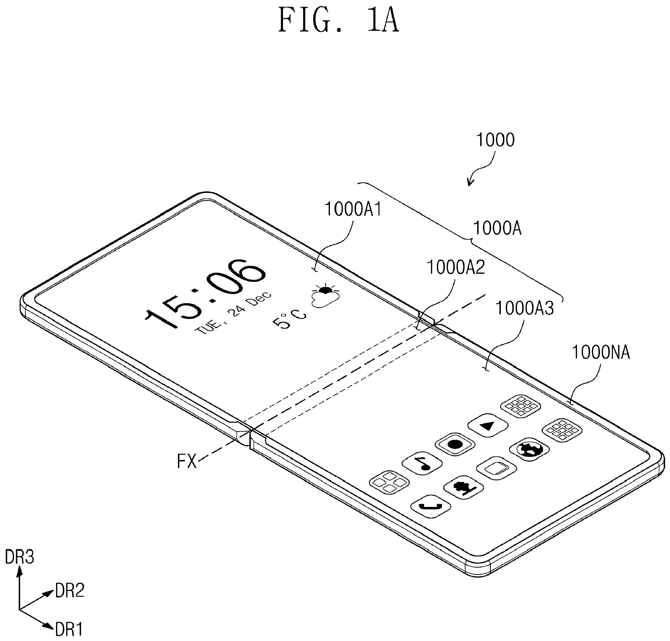

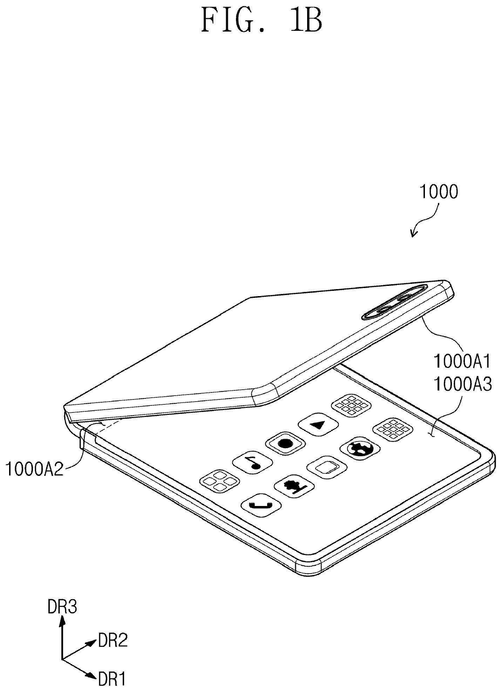

FIG. 1A is a perspective view of an electronic device 1000 according to one or more embodiments of the present invention. FIG. 1B is a perspective view of the electronic device 1000 according to one or more embodiments of the present invention. FIG. 1A illustrates an unfolded state of the electronic device 1000, and FIG. 1B illustrates a state in which the electronic device 1000 is being folded.

Referring to FIGS. 1A and 1B, the electronic device 1000 may be activated depending on an electrical signal. For example, the electronic device 1000 may be a mobile phone, a tablet computer, a car navigation unit, a game machine, or a wearable device, but is not limited thereto. In FIGS. 1A and 1B, the electronic device 1000 is illustrated as a mobile phone.

The electronic device 1000 may display an image through an active region 1000A. In the unfolded state of the electronic device 1000, the active region 1000A may include a plane defined by a first direction DR1 and a second direction DR2. The thickness direction of the electronic device 1000 may be parallel to a third direction DR3 that crosses the first direction DR1 and the second direction DR2. Accordingly, front surfaces (or, upper surfaces) and rear surfaces (or, lower surfaces) of members constituting the electronic device 1000 may be defined based on the third direction DR3.

The active region 1000A may include a first region 1000A1, a second region 1000A2, and a third region 1000A3. The second region 1000A2 may be bent about a folding axis FX extending in the second direction DR2. Accordingly, the first region 1000A1 and the third region 1000A3 may be referred to as non-folding regions, and the second region 1000A2 may be referred to as a folding region.

When the electronic device 1000 is folded, the first region 1000A1 and the third region 1000A3 may face each other. Accordingly, in a fully folded state, the active region 1000A may not be exposed to the outside, and this may be referred to as an in-folding operation. However, this is illustrative, and an operation of the electronic device 1000 is not limited thereto.

In one or more embodiments of the present invention, the electronic device 1000 may perform both an in-folding operation and an out-folding operation. When the electronic device 1000 is folded, the first region 1000A1 and the third region 1000A3 may face away from each other. Accordingly, in the folded state, the active region 1000A may be exposed to the outside, and this may be referred to as an out-folding operation. The same region of the electronic device 1000, for example, the second region 1000A2 may be folded inward and outward. Alternatively, one partial region of the electronic device 1000 may be folded inward, and another partial region of the electronic device 1000 may be folded outward.

Although one folding region and two non-folding regions are illustrated as an example in FIGS. 1A and 1B, the numbers of folding regions and non-folding regions are not limited thereto. For example, the electronic device 1000 may include three or more non-folding regions and a plurality of folding areas located between the adjacent non-folding regions.

In FIGS. 1A and 1B, the folding axis FX is illustrated as being parallel to a short axis of the electronic device 1000. However, the present invention is not limited thereto. For example, in one or more other embodiments, the folding axis FX may extend in a direction parallel to a long axis of the electronic device 1000, for example, in a direction parallel to the first direction DR1. In this case, the first region 1000A1, the second region 1000A2, and the third region 1000A3 may be sequentially arranged in the second direction DR2.

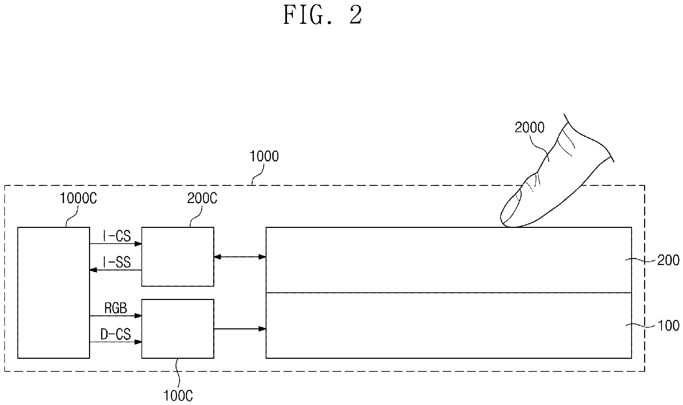

FIG. 2 is a view for explaining an operation of the electronic device 1000 according to one or more embodiments of the present invention.

Referring to FIG. 2, the electronic device 1000 may include a display layer 100, a sensor layer 200, a display driver 100C, a sensor driver 200C, and a main driver 1000C. The driver may be referred to as a driving circuit, a circuit, or driver IC.

The display layer 100 may be a component that substantially generates an image. The display layer 100 may be an emissive display layer. For example, the display layer 100 may be an organic light-emitting display layer, an inorganic light-emitting display layer, an organic-inorganic light-emitting display layer, a quantum-dot display layer, a micro-LED display layer, or a nano-LED display layer.

The sensor layer 200 may be located on the display layer 100. The sensor layer 200 may sense an external input 2000 applied from the outside. The external input 2000 may include all input means capable of providing a change in capacitance. For example, the sensor layer 200 may sense not only an input by an input means of a passive type, such as a body of a user, but also an input by an input means of an active type that provides a drive signal.

The main driver 1000C may control overall operation of the electronic device 1000. For example, the main driver 1000C may control operations of the display driver 100C and the sensor driver 200C. The main driver 1000C may include at least one microprocessor. The main driver 1000C may be referred to as a host. The main driver 1000C may further include a graphics controller.

The display driver 100C may drive the display layer 100. The display driver 100C may receive image data RGB and a control signal D-CS from the main driver 1000C. The control signal D-CS may include various signals. For example, the control signal D-CS may include an input vertical synchronization signal, an input horizontal synchronization signal, a main clock, a data enable signal, and the like. Based on the control signal D-CS, the display driver 100C may generate a vertical synchronization signal and a horizontal synchronization signal for controlling timing at which a signal is provided to the display layer 100.

The sensor driver 200C may drive the sensor layer 200. The sensor driver 200C may receive a control signal I-CS from the main driver 1000C. The control signal I-CS may include a mode determination signal for determining a drive mode of the sensor driver 200C or a clock signal.

The sensor driver 200C may calculate coordinate information of an input based on a signal received from the sensor layer 200, and may provide a signal I-SS having the coordinate information to the main driver 1000C. Alternatively, the sensor driver 200C may determine whether the electronic device 1000 is folded or unfolded, based on a signal received from the sensor layer 200, and may provide a signal I-SS having information thereabout to the main driver 1000C. The main driver 1000C executes an operation corresponding to a user input or an operation corresponding to a state of the electronic device 1000, based on the signal I-SS. For example, based on the signal I-SS, the main driver 1000C may operate the display driver 100C to display a new application image on the display layer 100.

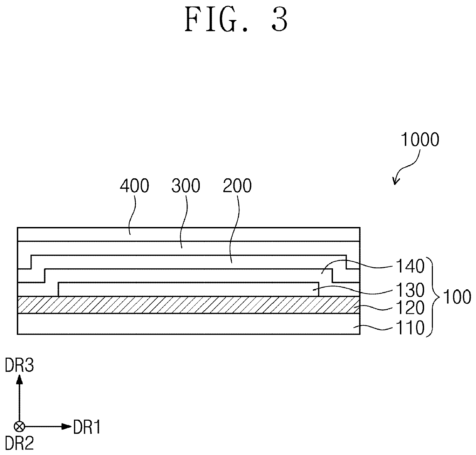

FIG. 3 is a sectional view of the electronic device 1000 according to one or more embodiments of the present invention.

Referring to FIG. 3, the electronic device 1000 may include the display layer 100, the sensor layer 200, an anti-reflective layer 300, and a window 400.

The display layer 100 may include a base layer 110, a circuit layer 120, a light-emitting element layer 130, and an encapsulation layer 140.

The base layer 110 may be a member that provides a base surface on which the circuit layer 120 is located. The base layer 110 may be a glass substrate, a metal substrate, a polymer substrate, or the like. However, without being limited thereto, the base layer 110 may be an inorganic layer, an organic layer, or a composite layer.

The circuit layer 120 may be located on the base layer 110. The circuit layer 120 may include an insulating layer, a semiconductor pattern, a conductive pattern, and a signal line. An insulating layer, a semiconductor layer, and a conductive layer may be formed on the base layer 110 by a process such as coating or deposition and may be selectively subjected to patterning by performing a photolithography process a plurality of times. Thereafter, the semiconductor pattern, the conductive pattern, and the signal line, which are included in the circuit layer 120, may be formed.

The light-emitting element layer 130 may be located on the circuit layer 120. The light-emitting element layer 130 may include light-emitting elements. For example, the light-emitting element layer 130 may include an organic light-emitting material, an inorganic light-emitting material, an organic-inorganic light-emitting material, a quantum dot, a quantum rod, a micro LED, or a nano LED.

The encapsulation layer 140 may be located on the light-emitting element layer 130. The encapsulation layer 140 may protect the light-emitting element layer 130 from foreign matter such as moisture, oxygen, and dust particles.

The sensor layer 200 may be located on the display layer 100. The sensor layer 200 may be formed on the display layer 100 through a continuous process. In this case, the sensor layer 200 may be expressed as being directly located on the display layer 100. When the sensor layer 200 is directly located on the display layer 100, this may mean that a third component is not located between the sensor layer 200 and the display layer 100. That is, a separate adhesive member may not be located between the sensor layer 200 and the display layer 100. Alternatively, the sensor layer 200 may be coupled with the display layer 100 through an adhesive member. The adhesive member may include a conventional adhesive or sticky substance.

The anti-reflective layer 300 may be located on the sensor layer 200. The anti-reflective layer 300 may decrease the reflectance of external light incident from outside the electronic device 1000. The anti-reflective layer 300 may be directly located on the sensor layer 200. However, without being limited thereto, an adhesive member may be located between the anti-reflective layer 300 and the sensor layer 200.

The window 400 may be located on the anti-reflective layer 300. The window 400 may include an optically transparent insulating material. For example, the window 400 may include glass or plastic. The window 400 may have a multi-layer structure or a single-layer structure. For example, the window 400 may include a plurality of plastic films coupled through an adhesive, or may include a glass substrate and a plastic film coupled through an adhesive.

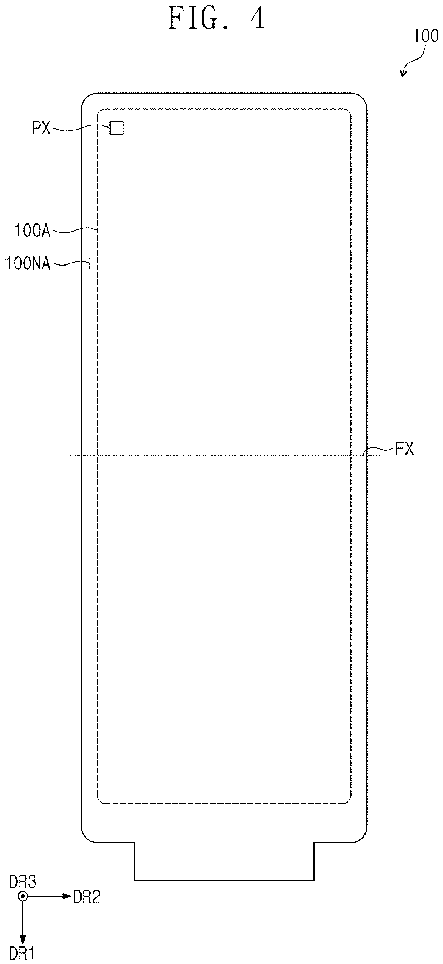

FIG. 4 is a plan view of the display layer 100 according to one or more embodiments of the present invention.

Referring to FIG. 4, the display layer 100 includes a display region 100A and a non-display region 100NA that correspond to the active region 1000A (refer to FIG. 1A) and a peripheral region 1000NA (refer to FIG. 1A) of the electronic device 1000 (refer to FIG. 1A), respectively. The expression "one region/portion corresponds to another region/portion," as used herein, means that the regions/portions overlap each other and is not limited to having the same area.

The display region 100A may display an image, and the non-display region 100NA may not display an image. A plurality of pixels PX may be located in the display region 100A. The non-display region 100NA may surround the display region 100A. However, without being limited thereto, the shape of the display region 100A and the shape of the non-display region 100NA may be modified.

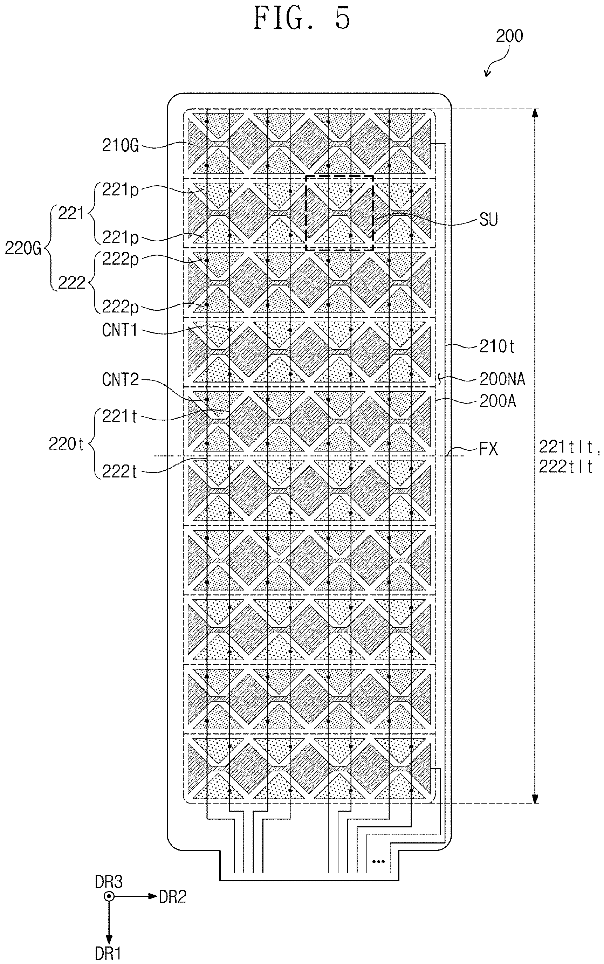

FIG. 5 is a plan view of the sensor layer 200 according to one or more embodiments of the present invention.

Referring to FIGS. 4 and 5, a sensing region 200A and a peripheral region 200NA adjacent to the sensing region 200A may be defined in the sensor layer 200. The sensing region 200A may overlap the display region 100A, and the peripheral region 200NA may overlap the non-display region 100NA.

The sensor layer 200 may include a plurality of first electrode groups 210G and a plurality of second electrode groups 220G located in the sensing region 200A. The second electrode groups 220G may cross the first electrode groups 21 0G. The first electrode groups 210G may be arranged in the first direction DR1, and the second electrode groups 220G may be arranged in the second direction DR2 crossing the first direction DR1. The first electrode groups 210G arranged in the first direction may be spaced apart from neighbored first electrode groups 210G respectively. Each of the first electrode groups 210G may extend in the second direction DR2, and each of the second electrode groups 220G may extend in the first direction DR1. Although ten first electrode groups 210G and four second electrode groups 220G are illustrated as an example in FIG. 5, the numbers of first electrode groups 210G and second electrode groups 220G are not limited thereto.

Each of the second electrode groups 220G may include a first electrode 221 and a second electrode 222. The first electrode 221 may include a plurality of first electrode patterns 221p arranged in the first direction DR1. The second electrode 222 may include a plurality of second electrode patterns 222p arranged in the first direction DR1. Although FIG. 5 illustrates an example that one first electrode 221 includes ten first electrode patterns 221p and one second electrode 222 includes ten second electrode patterns 222p, the present invention is not limited thereto.

In one or more embodiments of the present invention, the first electrode patterns 221p and the second electrode patterns 222p may be arranged such that at least one first electrode pattern 221p and at least one second electrode pattern 222p alternate with each other. FIG. 5 illustrates an example that two first electrode patterns 221p and two second electrode patterns 222p alternate with each other in the first direction DR1.

In one or more embodiments of the present invention, the first electrode groups 210G, the first electrode patterns 221p, and the second electrode patterns 222p may each have a mesh shape in which a plurality of openings are defined. However, the present invention is not particularly limited thereto. In one or more embodiments of the present invention, the first electrode groups 210G, the first electrode patterns 221p, and the second electrode patterns 222p may be located on the same layer. For example, the first electrode groups 210G, the first electrode patterns 221p, and the second electrode patterns 222p may include the same material, and may be concurrently or substantially simultaneously formed through the same process. However, this is illustrative, and the present invention is not particularly limited thereto.

In one or more embodiments of the present invention, the first electrode groups 210G, the first electrode patterns 221p, and the second electrode patterns 222p may each have a triangular shape. The first electrode groups 210G, the first electrode patterns 221p, and the second electrode patterns 222p may each have a shape, in particular a triangular shape, corresponding to a neighbored first electrode group 210G, first electrode pattern 221p, or second electrode pattern 222p.

The sensor layer 200 may include a plurality of trace lines 210t and 220t. The plurality of trace lines 210t and 220t may include the first group of trace lines 210t and the second group of trace lines 220t.

The first electrode groups 210G may have a rectangular shape, wherein neighbored electrodes may be connected via bar-shaped parts. The bar-shaped parts may connect neighbored electrodes at corner parts of the rectangular shape.

The first electrode patterns 221p and/or the second electrode patterns 222p may each have a corresponding shape, in particular a triangular shape, to the space between neighbored first electrode groups 210G.

The first group of trace lines 210t may be connected to the first electrode groups 210G in a one-to-one correspondence. Although FIG. 5 illustrates an example that the first group of trace lines 210t are located in the peripheral region 200NA, the present invention is not particularly limited thereto. For example, at least some of the first group of trace lines 210t may be located in the sensing region 200A.

Each of the second electrode groups 220G includes two electrodes, for example, the first electrode 221 and the second electrode 222. Accordingly, the second group of trace lines 220t may be connected to the second electrode groups 220G in a two-to-one correspondence. The second group of trace lines 220t may include first trace lines 221t connected to the first electrodes 221 of the second electrode groups 220G in a one-to-one correspondence, and may include second trace lines 222t connected to the second electrodes 222 of the second electrode groups 220G in a one-to-one correspondence. At least portions of the first trace lines 221t and the second trace lines 222t may be located in the sensing region 200A. Accordingly, the at least portions of the first trace lines 221t and the second trace lines 222t may overlap the display region 100A.

One first trace line 221t may be electrically connected with the first electrode patterns 221p included in the first electrode 221. In addition, one second trace line 222t may be electrically connected with the second electrode patterns 222p included in the second electrode 222.

The first trace line 221t and the second trace line 222t may be located on a layer different from the layer on which the first electrode patterns 221p and the second electrode patterns 222p are located. For example, an insulating layer or an insulating pattern may be located between the first and second trace lines 221t and 222t and the first and second electrode patterns 221p and 222p. Accordingly, the first trace line 221t may be electrically connected with the first electrode patterns 221p through a plurality of first contacts CNT1 penetrating the insulating layer, and the second trace line 222t may be electrically connected with the second electrode patterns 222p through a plurality of second contacts CNT2 penetrating the insulating layer. The plurality of first contacts CNT1 and the plurality of second contacts CNT2 may overlap the display region 100A.

In one or more embodiments of the present invention, the length 221tlt of a portion of the first trace line 221t that overlaps the display region 100A may be substantially the same as the length 222tlt of a portion of the second trace line 222t that overlaps the display region 100A. For example, the first trace line 2211 may extend to a region beyond the outermost first contact CNT1, and the second trace line 222t may extend to a region beyond the outermost second contact CNT2. In this case, a difference between the load of the first trace line 221t and the load of the second trace line 222t may be reduced, and thus accuracy in coordinate sensing and folding sensing using the sensor layer 200 may be improved.

A region where one first electrode group 210G and one second electrode group 220G cross each other may be defined as a sensing unit SU. The sensing unit SU may be referred to as a node. In one or more embodiments of the present invention, the second electrode group 220G includes the first electrode 221 and the second electrode 222. Accordingly, one sensing unit SU may overlap a portion of one first electrode group 210G, a portion of one first electrode 221, and a portion of one second trace line 222t. Alternatively, one sensing unit SU may overlap a portion of one first electrode group 210G, a portion of one second electrode 222, and a portion of one first trace line 221t.

The first trace line 221t may be a component electrically connected with the first electrode 221, and may be regarded as a portion of the first electrode 221. The second trace line 222t may be a component electrically connected with the second electrode 222, and may be regarded as a portion of the second electrode 222. Accordingly, the sensing unit SU of the sensor layer 200 may be regarded as a structure including at least three electrodes. The sensor driver 200C (refer to FIG. 2) may transmit a signal to one electrode, for example, one first electrode group 210G, and may receive signals from two electrodes, for example, the first electrode 221 and the second electrode 222. The sensor driver 200C may detect input coordinates based on an output signal obtained by subtracting the received signals. As one of the signals is subtracted from the other, noise included in the signals may be removed. Accordingly, the touch sensitivity of the electronic device 1000 (refer to FIG. 1A) may be improved.

The shapes of the first electrode groups 210G and the second electrode groups 220G illustrated in FIG. 5 are not limited thereto. For example, each of the first electrode groups 210G may be divided into two or more sub-electrodes arranged in the first direction DR1. In this case, sub-electrodes included in the same sensing unit SU may be electrically connected to the same trace line or pad. Alternatively, each of the first electrode 221 and the second electrode 222 included in the second electrode group 220G may also be divided into a plurality of sub-electrodes arranged in the second direction DR2. In this case, sub-electrodes of the first electrode 221 included in the same sensing unit SU may be electrically connected to the same trace line or pad, and sub-electrodes of the second electrode 222 included in the same sensing unit SU may be electrically connected to the same trace line or pad.

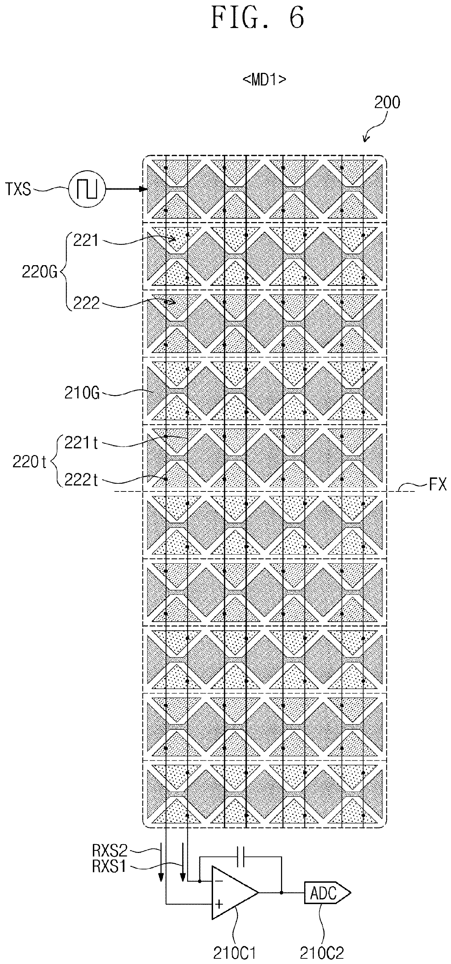

FIG. 6 is a view for explaining an operation of the sensor layer 200 according to one or more embodiments of the present invention.

Referring to FIGS. 2 and 6, the sensor layer 200 and the sensor driver 200C may operate in a first mode MD1 for sensing a touch.

The sensor driver 200C may include a plurality of first analog front ends 210C1 and a plurality of analog-to-digital converters 210C2.

The second electrode groups 220G may be electrically connected with the first analog front ends 210C1 in a one-to-one correspondence, and may be electrically connected with the analog-to-digital converters 210C2 in a one-to-one correspondence. In FIG. 6, one first analog front end 210C1 and one analog-to-digital converter 210C2, which are connected to one second electrode group 220G, are representatively illustrated.

In the first mode MD1, the sensor driver 200C may output transmission signals TXS to the first electrode groups 210G. The transmission signals TXS may be sequentially output to the first electrode groups 210G, or may be concurrently or substantially simultaneously output to the first electrode groups 210G. When the transmission signals TXS are concurrently or substantially simultaneously output to the first electrode groups 210G, at least one transmission signal among the transmission signals TXS provided to the first electrode groups 210G may have a frequency, waveform, or amplitude that is different from those of the other transmission signals.

In the first mode MD1, the first analog front end 210C1 may receive two signals RXS1 and RXS2 from the corresponding second electrode group 220G, and may output a signal obtained by subtracting the two signals RXS1 and RXS2. For example, the first analog front end 210C1 may output, to the analog-to-digital converter 210C2, the signal obtained by subtracting the signal RXS1 received from the first electrode 221 from the signal RXS2 received from the second electrode 222 (e.g., the signal corresponding to a difference between the signals RXS1 and RXS2). The first analog front end 210C1 may be a differential analog front end.

According to one or more embodiments of the present invention, noise included in the signals RXS1 and RXS2 may be removed as one of the signal RXS1 received from the first electrode 221 or the signal RXS2 received from the second electrode 222 is subtracted from the other. Accordingly, the sensing sensitivity of the electronic device 1000 (refer to FIG. 1A) may be improved.

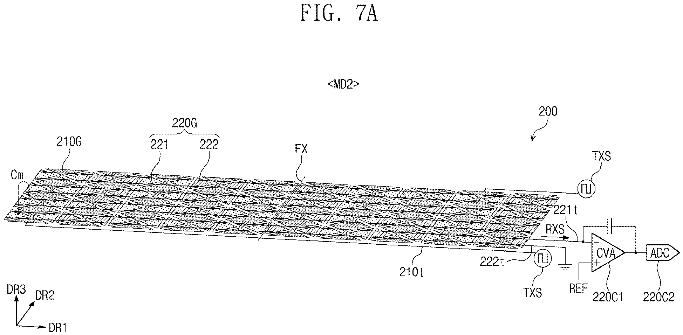

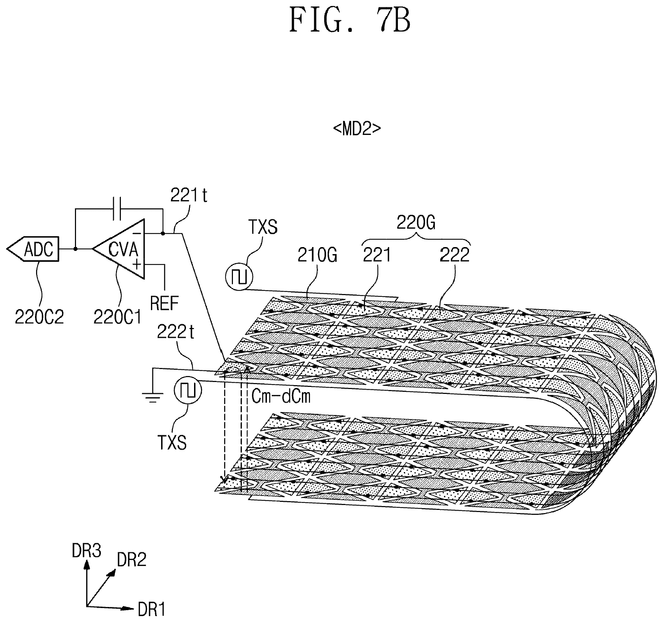

FIG. 7A is a view for explaining an operation of the sensor layer 200 according to one or more embodiments of the present invention. FIG. 7B is a view for explaining an operation of the sensor layer 200 according to one or more embodiments of the present invention.

Referring to FIGS. 2, 7A, and 7B, the sensor layer 200 and the sensor driver 200C may operate in a second mode MD2 for sensing folding of the display layer 100 and the sensor layer 200.

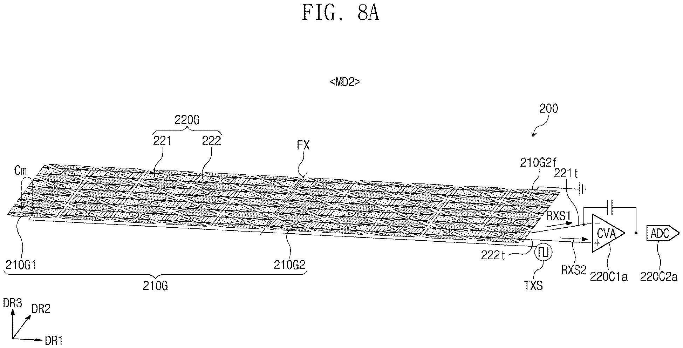

The sensor layer 200 and the sensor driver 200C may selectively operate in the first mode MD1 (refer to FIG. 6) or the second mode MD2. Components included in the sensor layer 200 may be selectively connected with a circuit included in the sensor driver 200C depending on the first mode MD1 or the second mode MD2. The frequency of folding-unfolding operations of the electronic device 1000 (refer to FIG. 1A) may be lower than the frequency of touch inputs. Accordingly, the operation period of the second mode MD2 may be greater than or equal to the operation period of the first mode MD1. This may be identically applied to embodiments that will be described below with reference to FIGS. 8A to 15B.

In the second mode MD2, the sensor driver 200C may output transmission signals TXS to at least some of the first electrode groups 210G. Although FIG. 7A illustrates an example that transmission signals TXS are provided to two first electrode groups 210G, the present invention is not limited thereto. In one or more embodiments of the present invention, all channels of the first electrode groups 210G may be driven for signal transmission, or, instead, some channels or only one channel of the first electrode groups 210G may be driven for signal transmission.

One of the first electrode 221 or the second electrode 222 included in one second electrode group 220G may output a signal RXS to a second analog front end 220C1, and the other may be grounded. Although FIG. 7A illustrates an example that the first electrode 221 is electrically connected with the second analog front end 220C1 and the second electrode 222 is grounded, the present invention is not particularly limited thereto. The second analog front end 220C1 may output the signal RXS that is received from the first electrode 221 to an analog-to-digital converter 220C2, .

In one or more embodiments of the present invention, the second analog front end 220C1 may be a single-ended analog front end. Accordingly, the first electrode 221 or the second electrode 222 may be connected to an inverting terminal of a charge-to-voltage amplifier CVA included in the second analog front end 220C1. A reference voltage REF may be applied to a non-inverting terminal of the charge-to-voltage amplifier, or the non-inverting terminal of the charge-to-voltage amplifier may be grounded.

Although only the second analog front end 220C1 connected to the one second electrode group 220G is illustrated in FIGS. 7A and 7B, the present invention is not limited thereto. For example, in one or more embodiments of the present invention, two or more second electrode groups 220G among the second electrode groups 220G may be driven for signal reception in the second mode MD2. In this case, a plurality of second analog front ends 220C1 may be provided, and the second analog front ends 220C1 may be electrically connected to the second electrode groups 220G driven for signal reception in a one-to-one correspondence.

In one or more embodiments of the present invention, a second electrode 222, which is included in a second electrode group 220G that is not being driven for signal reception among the second electrode groups 220G, may be grounded or electrically floated.

According to one or more embodiments of the present invention, the sensor layer 200 may be driven in a mutual capacitance type, and thus a folding operation or an unfolding operation may be sensed. The transmission signal TXS may be provided to the first electrode group 210G, and the signal RXS may be output from the first electrode 221. The grounded second electrode 222 may provide a touch (or an input).

A case in which the sensor layer 200 is changed from an unfolded state illustrated in FIG. 7A to a folded state illustrated in FIG. 7B will be described. The sensor driver 200C senses "Cm" in the unfolded state of the sensor layer 200, as shown in FIG. 7A. The sensor driver 200C takes this as a base line. The sensor driver 200C senses "Cm - dCm" in the folded state of the sensor layer 200, as shown in FIG. 7B. The sensor driver 200C calculates "(Cm) - (Cm - dCm) = dCm." In this case, "dCm" on the right side of the equal sign may be a folding detection signal. In the folded state of the sensor layer 200, some of the first electrode groups 210G face other first electrode groups 210G, and the first electrode 221 faces the second electrode 222.

A case in which the sensor layer 200 is changed from the folded state illustrated in FIG. 7B to the unfolded state illustrated in FIG. 7A will be described. The sensor driver 200C senses "Cm - dCm" in the folded state of the sensor layer 200. The sensor driver 200C takes this as a base line. The sensor driver 200C senses "Cm" in the unfolded state of the sensor layer 200. The sensor driver 200C calculates "(Cm - dCm) - (Cm) = -dCm." In this case, "-dCm" on the right side of the equal sign may be an unfolding detection signal.

In the sensor layer 200 driven in the mutual capacitance type by the single-ended analog front end, the number of nodes that sense folding is increased as the number of channels of the first electrode 221 driven for signal reception and the number of channels of the first electrode groups 210G driven for signal transmission are increased. In addition, as the number of channels of grounded second electrodes 222 is increased, the number of nodes that provide a touch is increased. As the number of nodes is increased, whether the sensor layer 200 is folded may be suitably determined.

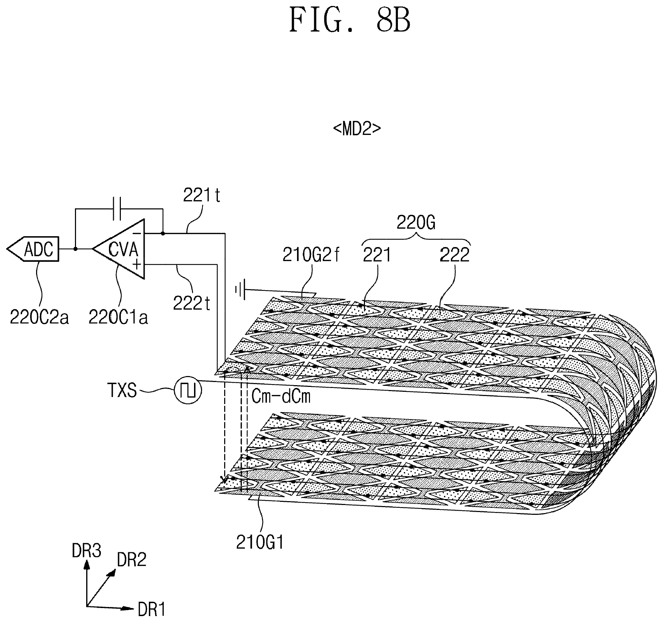

FIG. 8A is a view for explaining an operation of the sensor layer 200 according to one or more embodiments of the present invention. FIG. 8B is a view for explaining an operation of the sensor layer 200 according to one or more embodiments of the present invention.

Referring to FIGS. 2, 8A, and 8B, the display layer 100 and the sensor layer 200 may be folded and unfolded about the folding axis FX extending in the second direction DR2. The plurality of first electrode groups 210G may include a plurality of first-first electrode groups 210G1 and a plurality of first-second electrode groups 210G2 spaced apart from each other with the folding axis FX therebetween.

In the second mode MD2, the sensor driver 200C may output transmission signals TXS to at least some of the first-first electrode groups 210G1. At least some of the first-second electrode groups 210G2 may be grounded.

One first electrode 221 and one second electrode 222 that are included in one second electrode group 220G and that alternate with each other in the first direction DR1 may be driven for signal reception. That is, the one first electrode 221 and the one second electrode 222 may be paired with each other, and may be electrically connected to the same second analog front end 220C1a.

The second analog front end 220C1a may be a differential analog front end. The first electrode 221 may be electrically connected to an inverting terminal of a charge-to-voltage amplifier included in the second analog front end 220C1a, and the second electrode 222 may be electrically connected to a non-inverting terminal of the charge-to-voltage amplifier.

The second analog front end 220C1a may output, to an analog-to-digital converter 220C2a, a signal obtained by subtracting a signal RXS1 received from the first electrode 221 and a signal RXS2 received from the second electrode 222.

Although only the second analog front end 220C1a connected to the one second electrode group 220G is illustrated in FIGS. 8A and 8B, the present invention is not limited thereto. For example, in one or more embodiments of the present invention, two or more second electrode groups 220G among the second electrode groups 220G may be driven for signal reception in the second mode MD2. In this case, a plurality of second analog front ends 220C1a may be provided, and the second analog front ends 220C1a may be electrically connected to the second electrode groups 220G driven for signal reception in a one-to-one correspondence.

In one or more embodiments of the present invention, among the first-first electrode groups 210G1, first-first electrode groups 210G1 crossing the electrode connected to the inverting terminal of the charge-to-voltage amplifier included in the second analog front end 220C1a may be driven for signal transmission. For example, in FIGS. 8A and 8B, the transmission signal TXS may be provided to the first-first electrode group 210G1 located between the first electrode patterns 221p (e.g., see FIG. 5) of the first electrode 221 because the signal RXS1 output from the first electrode 221 is provided to the inverting terminal.

According to one or more embodiments of the present invention, the sensor layer 200 may be driven in a mutual capacitance type, and thus a folding operation or an unfolding operation may be sensed. The transmission signal TXS may be provided to the first electrode group 210G, and the signals RXS1 and RXS2 may be output from the first electrode 221 and the second electrode 222, respectively. Among the first-second electrode groups 210G2, a grounded first-second electrode group 210G2f may provide a touch (or an input).

According to one or more embodiments of the present invention, as one of the signal RXS1 received from the first electrode 221 and the signal RXS2 received from the second electrode 222 is subtracted from the other by the second analog front end 220C1a, noise included in the signals RXS1 and RXS2 may be removed, and retransmission may be reduced or minimized.

A case in which the sensor layer 200 is changed from an unfolded state illustrated in FIG. 8A to a folded state illustrated in FIG. 8B will be described. In the unfolded state of the sensor layer 200, the inverting terminal of the charge-to-voltage amplifier may receive "Cm + Noise + Retransmission," and the non-inverting terminal of the charge-to-voltage amplifier may receive "Noise + Retransmission." Accordingly, the second analog front end 220C1a may output "-Cm" obtained by subtracting "Cm + Noise + Retransmission" from "Noise + Retransmission." In the folded state of the sensor layer 200, the inverting terminal of the charge-to-voltage amplifier may receive "Cm - dCm + Noise + Retransmission," and the non-inverting terminal of the charge-to-voltage amplifier may receive "Noise + Retransmission." Accordingly, the second analog front end 220C1a may output "dCm - Cm" obtained by subtracting "Cm - dCm + Noise + Retransmission" from "Noise + Retransmission." The sensor driver 200C calculates "(dCm - Cm) - (-Cm) = dCm." In this case, "dCm" on the right side of the equal sign may be a folding detection signal.

A case in which the sensor layer 200 is changed from the folded state illustrated in FIG. 8B to the unfolded state illustrated in FIG. 8A will be described. In the folded state of the sensor layer 200, the inverting terminal of the charge-to-voltage amplifier may receive "Cm - dCm + Noise + Retransmission," and the non-inverting terminal of the charge-to-voltage amplifier may receive "Noise + Retransmission." Accordingly, the second analog front end 220C1a may output "dCm - Cm" obtained by subtracting "Cm - dCm + Noise + Retransmission" from "Noise + Retransmission." In the unfolded state of the sensor layer 200, the inverting terminal of the charge-to-voltage amplifier may receive "Cm + Noise + Retransmission," and the non-inverting terminal of the charge-to-voltage amplifier may receive "Noise + Retransmission." Accordingly, the second analog front end 220C1a may output "-Cm" obtained by subtracting "Cm + Noise + Retransmission" from "Noise + Retransmission." The sensor driver 200C calculates "(-Cm) - (dCm - Cm) = -dCm." In this case, "-dCm" on the right side of the equal sign may be an unfolding detection signal.

In the sensor layer 200 driven in the mutual capacitance type by the differential analog front end, the number of nodes that sense folding is increased as the number of channels of the second electrode groups 220G, which are driven for signal reception, and the number of channels of the first-first electrode groups 210G1, which are driven for signal transmission, are increased. In addition, as the number of grounded first-second electrode groups 210G2 is increased, the number of nodes that provide a touch is increased. As the number of nodes is increased, whether the sensor layer 200 is folded may be suitably determined.

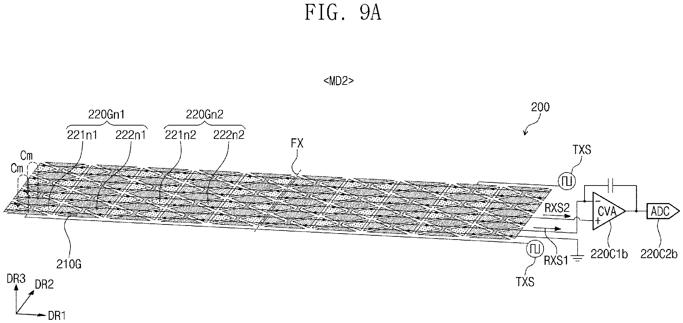

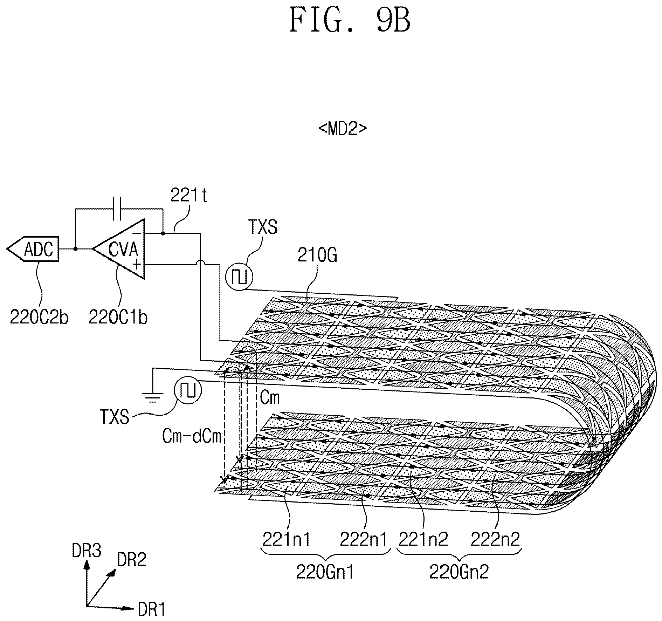

FIG. 9A is a view for explaining an operation of the sensor layer 200 according to one or more embodiments of the present invention. FIG. 9B is a view for explaining an operation of the sensor layer 200 according to one or more embodiments of the present invention.

Referring to FIGS. 2, 9A, and 9B, in the second mode MD2, the sensor driver 200C may output transmission signals TXS to at least some of the first electrode groups 210G. Although FIG. 9A illustrates an example that the transmission signals TXS are provided to two first electrode groups 210G, the present invention is not limited thereto.

In the second mode MD2, one first electrode 221n1 and the other first electrode 221n2, which are included in two second electrode groups 220Gn1 and 220Gn2 that are adjacent to each other among the plurality of second electrode groups 220G, may be driven for signal reception. For example, the one first electrode 221n1 and the other first electrode 221n2 may be paired with each other, and may be electrically connected to the same second analog front end 220C1b.

The second analog front end 220C1b may be a differential analog front end. The one first electrode 221n1 may be electrically connected to an inverting terminal of a charge-to-voltage amplifier included in the second analog front end 220C1b, and the other first electrode 221n2 may be electrically connected to a non-inverting terminal of the charge-to-voltage amplifier.

The second analog front end 220C1b may output, to an analog-to-digital converter 220C2b, a signal that is obtained by calculating a difference between a signal RXS1 received from the one first electrode 221n1 and a signal RXS2 received from the other first electrode 221n2.

In the second mode MD2, one second electrode 222n1, which is included in the two second electrode groups 220Gn1 and 220Gn2 adjacent to each other, may be grounded, and the other second electrode 222n2, which is included in the two second electrode groups 220Gn1 and 220Gn2 adjacent to each other, may not be grounded. For example, the other second electrode 222n2 may be floated. The grounded one second electrode 222n1 may provide a touch (or an input).

In an unfolded state of the sensor layer 200, the inverting terminal and the non-inverting terminal of the charge-to-voltage amplifier may receive "Cm," and the second analog front end 220C1b may output "0." In a folded state of the sensor layer 200, the first electrode 221n1, which alternates with the grounded one second electrode 222n1 in the first direction DR1, outputs "Cm - dCm." The first electrode 221n2, which alternates in the first direction DR1 with the other second electrode 222n2 that is not grounded, outputs "Cm." The inverting terminal of the charge-to-voltage amplifier of the second analog front end 220C1b receives "Cm - dCm," the non-inverting terminal of the charge-to-voltage amplifier receives "Cm," and the second analog front end 220C1b outputs "dCm." Accordingly, "dCm" may be a folding detection signal, and "0" may be an unfolding detection signal.

In the sensor layer 200 driven in the mutual capacitance type by the differential analog front end, the number of nodes that sense folding is increased as the number of channels of the second electrode groups 220G driven for signal reception and the number of first electrode groups 210G driven for signal transmission are increased. As the number of nodes is increased, whether the sensor layer 200 is folded may be suitably determined.

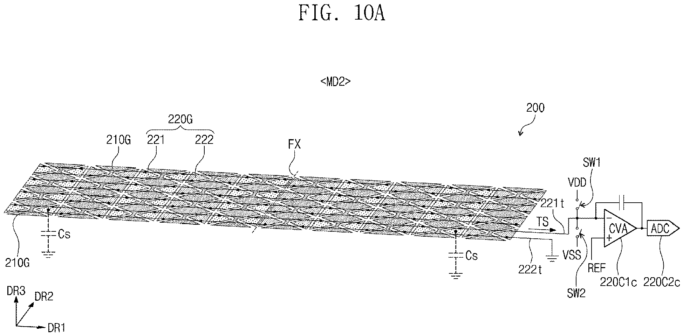

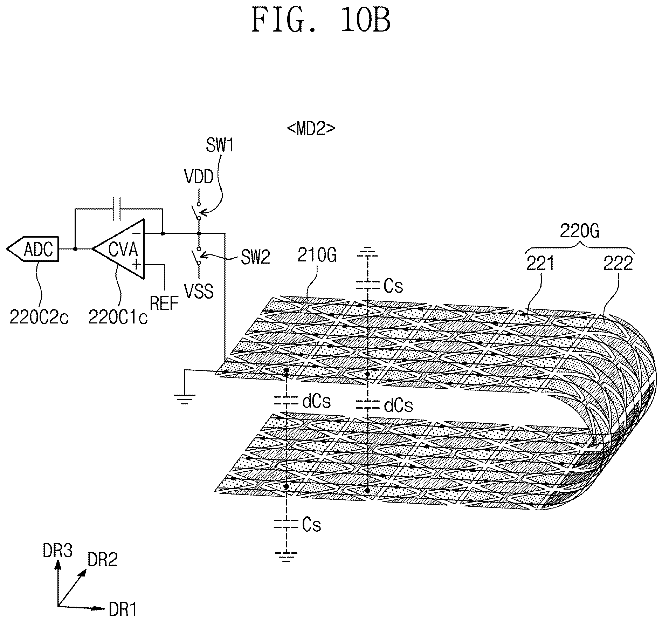

FIG. 10A is a view for explaining an operation of the sensor layer 200 according to one or more embodiments of the present invention. FIG. 10B is a view for explaining an operation of the sensor layer 200 according to one or more embodiments of the present invention.

Referring to FIGS. 2, 10A, and 10B, in the second mode MD2, the first electrode groups 210G may be grounded or floated.

One of the first electrode 221 or the second electrode 222 included in one second electrode group 220G may be electrically connected with a second analog front end 220C1c, and the other may be grounded. For example, the first electrode 221 may be electrically connected with the second analog front end 220C1c, and the second electrode 222 may be grounded.

In the second mode MD2, a first switch SW1 and a second switch SW2 may be alternately turned on, and a first voltage VDD and a second voltage VSS may be alternately provided to the first electrode 221. The first voltage VDD and the second voltage VSS may have different levels. Accordingly, a pulse signal may be provided to the first electrode 221. Thereafter, the first electrode 221 may output a signal TS to the second analog front end 220C1c. In the second mode MD2, the second analog front end 220C1c may output, to an analog-to-digital converter 220C2c, the signal TS received from the first electrode 221.

The second analog front end 220C1c may be a single-ended analog front end. Accordingly, the first electrode 221 or the second electrode 222 may be connected to an inverting terminal of a charge-to-voltage amplifier included in the second analog front end 220C1c, and a reference voltage REF may be applied to a non-inverting terminal of the charge-to-voltage amplifier, or the non-inverting terminal of the charge-to-voltage amplifier may be grounded.

According to one or more embodiments of the present invention, the sensor layer 200 may be driven in a self-capacitance type, and thus a folding operation or an unfolding operation may be sensed. For example, the first electrodes 221 of the second electrode groups 220G may all be driven for signal transmission/reception, or, instead, only the first electrodes 221 included in some of the second electrode groups 220G may be driven for signal transmission/reception. The second electrodes 222 of the second electrode groups 220G may all be grounded. Alternatively, some of the second electrodes 222 of the second electrode groups 220G may be grounded, and the other second electrodes 222 may not be grounded. The second electrodes 222 may provide a touch (or an input).

A case in which the sensor layer 200 is changed from an unfolded state illustrated in FIG. 10A to a folded state illustrated in FIG. 10B will be described. In the unfolded state of the sensor layer 200, the sensor driver 200C senses "Cs" and takes this as a base line. In the folded state of the sensor layer 200, the sensor driver 200C senses "Cs + dCs." The sensor driver 200C calculates "(Cs + dCs) - (Cs) = dCs." In this case, "dCs" on the right side of the equal sign may be a folding detection signal.

A case in which the sensor layer 200 is changed from the folded state illustrated in FIG. 10B to the unfolded state illustrated in FIG. 10A will be described. In the folded state of the sensor layer 200, the sensor driver 200C senses "Cs + dCs." The sensor driver 200C takes this as a base line. In the unfolded state of the sensor layer 200, the sensor driver 200C senses "Cs." The sensor driver 200C calculates "(Cs) - (Cs + dCs) = -dCs." In this case, "-dCs" on the right side of the equal sign may be an unfolding detection signal.

In the sensor layer 200 driven in the self-capacitance type by the single-ended analog front end, the number of nodes that sense folding is increased as the number of channels of the second electrode groups 220G, which are driven for signal transmission/reception, is increased. In addition, as the number of grounded or floated first electrode groups 210G is increased, the number of nodes that provide a touch is increased. As the number of nodes is increased, whether the sensor layer 200 is folded may be suitably determined. In one or more embodiments of the present invention, as the number of grounded first electrode groups 210G is decreased, the number of nodes that provide a touch may be decreased. However, the transmission/reception drive load of the sensor layer 200 driven in the self-capacitance type by the single-ended analog front end may be decreased.

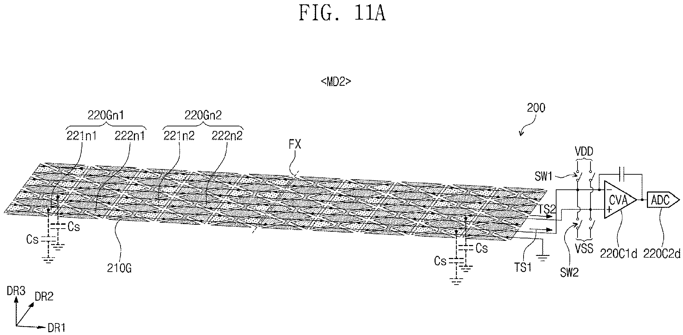

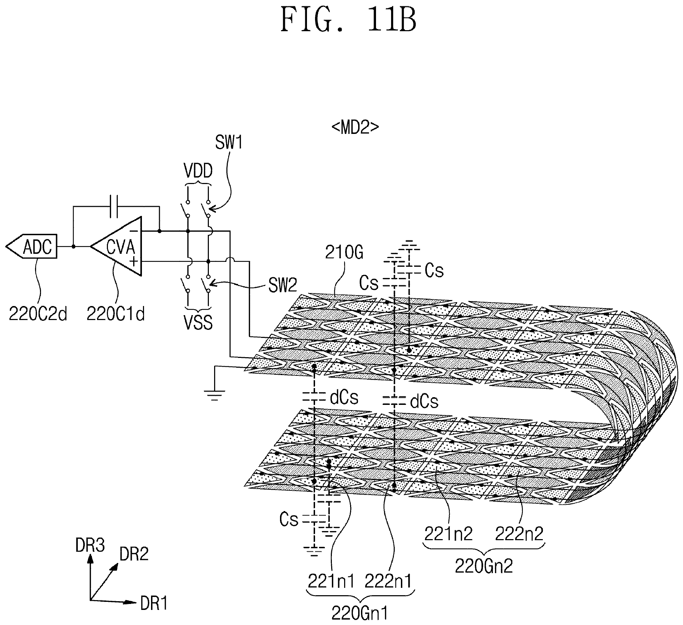

FIG. 11A is a view for explaining an operation of the sensor layer 200 according to one or more embodiments of the present invention. FIG. 11B is a view for explaining an operation of the sensor layer 200 according to one or more embodiments of the present invention.

Referring to FIGS. 2, 11A, and 11B, in the second mode MD2, the first electrode groups 210G may be grounded or floated.

In the second mode MD2, one first electrode 221n1 and the other first electrode 221n2, which are included in two second electrode groups 220Gn1 and 220Gn2 that are adjacent to each other among the plurality of second electrode groups 220G, may be driven for signal transmission/reception. For example, the one first electrode 221n1 and the other first electrode 221n2 may be paired with each other, and may be electrically connected to the same second analog front end 220C1d.

The second analog front end 220C1d may be a differential analog front end. The one first electrode 221n1 may be electrically connected to an inverting terminal of a charge-to-voltage amplifier included in the second analog front end 220C1d, and the other first electrode 221n2 may be electrically connected to a non-inverting terminal of the charge-to-voltage amplifier.

In the second mode MD2, a first switch SW1 and a second switch SW2 may be alternately turned on, and a first voltage VDD and a second voltage VSS may be alternately provided to the first electrodes 221n1 and 221n2. That is, a pulse signal may be provided to the first electrodes 221n1 and 221n2. Thereafter, the one first electrode 221n1 may output a signal TS1, and the other first electrode 221n2 may output a signal TS2. The second analog front end 220C1d may output, to an analog-to-digital converter 220C2d, a signal obtained by calculating a difference between the signal TS1, which is received from the one first electrode 221n1, and the signal TS2, which is received from the other first electrode 221n2.

In the second mode MD2, one second electrode 222n1, which is included in the two second electrode groups 220Gn1 and 220Gn2 that are adjacent to each other, may be grounded. The other second electrode 222n2, which is included in the two second electrode groups 220Gn1 and 220Gn2 that are adjacent to each other, may not be grounded. For example, the other second electrode 222n2 may be floated. The grounded one second electrode 222n1 may provide a touch (or an input).

According to one or more embodiments of the present invention, the sensor layer 200 may be driven in a self-capacitance type, and thus a folding operation or an unfolding operation may be sensed. The first electrodes 221 of the second electrode groups 220G may all be driven for signal transmission/reception, or, instead, only the first electrodes 221 included in some of the second electrode groups 220G may be driven for signal transmission/reception.

According to one or more embodiments of the present invention, noise included in the signals TS1 and TS2 may be removed as a difference between the signal TS1 received from the one first electrode 221n1 and the signal TS2 received from the other first electrode 221n2 is determined by the second analog front end 220C1d.

In an unfolded state of the sensor layer 200, the inverting terminal and the non-inverting terminal of the charge-to-voltage amplifier may receive "Cs," and the second analog front end 220C1d may output "0." In a folded state of the sensor layer 200, the first electrode 221n1, which is alternating with the grounded one second electrode 222n1, outputs "Cs + dCs," and the first electrode 221n2, which is alternating with the other second electrode 222n2 that is not grounded, outputs "Cs." The inverting terminal of the charge-to-voltage amplifier of the second analog front end 220C1d receives "Cs + dCs," the non-inverting terminal of the charge-to-voltage amplifier receives "Cs," and the second analog front end 220C1d outputs "-dCs." Accordingly, "-dCs" may be a folding detection signal, and "0" may be an unfolding detection signal.

In the sensor layer 200 driven in the self-capacitance type by the differential analog front end, the number of nodes that sense folding is increased as the number of channels of the second electrode groups 220G driven in pairs for signal transmission/reception is increased. In addition, as the number of grounded first electrode groups 210G of the sensor layer 200 is increased, the number of nodes touched is increased. Accordingly, as the number of nodes is increased, whether the sensor layer 200 is folded may be suitably determined. In one or more embodiments of the present invention, as the number of grounded first electrode groups 210G is decreased, the number of nodes that provide a touch may be decreased. However, the transmission/reception drive load of the sensor layer 200 driven in the self-capacitance type by the differential analog front end may be decreased.

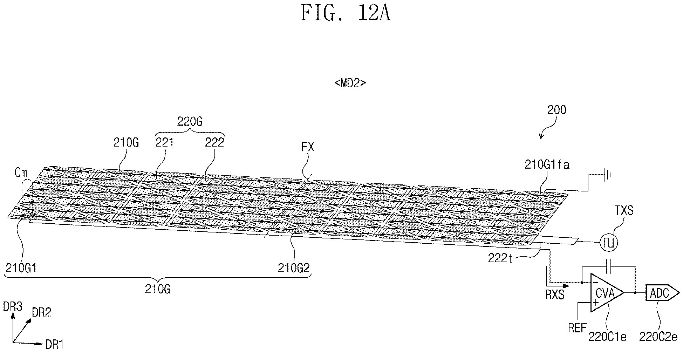

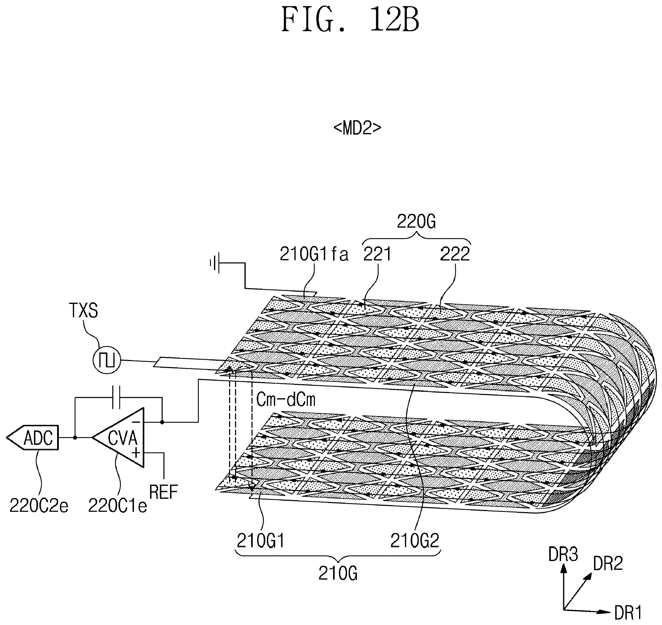

FIG. 12A is a view for explaining an operation of the sensor layer 200 according to one or more embodiments of the present invention. FIG. 12B is a view for explaining an operation of the sensor layer 200 according to one or more embodiments of the present invention.

Referring to FIGS. 2, 12A, and 12B, the display layer 100 and the sensor layer 200 may be folded and unfolded about the folding axis FX extending in the second direction DR2. The plurality of first electrode groups 210G may include a plurality of first-first electrode groups 210G1 and a plurality of first-second electrode groups 210G2 spaced apart from each other with the folding axis FX therebetween.

In the second mode MD2, the sensor driver 200C may output transmission signals TXS to at least some of the second electrode groups 220G. For example, the same transmission signal TXS may be provided to the first electrode 221 and the second electrode 222 included in one second electrode group 220G. Accordingly, it may be substantially the same as including two electrodes in one sensing unit SU (refer to FIG. 5) in the second mode MD2. In one or more embodiments of the present invention, all channels of the second electrode groups 220G may be driven for signal transmission, or only some channels of the second electrode groups 220G may be driven for signal transmission.

In the second mode MD2, one first-first electrode group 210G1 among the first-first electrode groups 210G1 may output a signal RXS to a second analog front end 220C1e. At least some of the first-second electrode groups 210G2 may be grounded. For example, when the sensor layer 200 is folded, a first-second electrode group 210G1fa facing the first-first electrode group 210G1 driven for signal reception may be grounded, and may provide a touch. In one or more embodiments of the present invention, all channels of the first-first electrode groups 210G1 may be driven for signal reception, or only some channels of the first-first electrode groups 210G1 may be driven for signal reception. Accordingly, all channels of the first-second electrode groups 210G2 may be grounded, or only at least some channels of the first-second electrode groups 210G2 may be grounded.

The second analog front end 220C1e may be a single-ended analog front end. Accordingly, the one first-first electrode group 210G1 may be connected to an inverting terminal of a charge-to-voltage amplifier included in the second analog front end 220C1e, and a reference voltage REF may be applied to a non-inverting terminal of the charge-to-voltage amplifier, or the non-inverting terminal of the charge-to-voltage amplifier may be grounded. The second analog front end 220C1e may output, to an analog-to-digital converter 220C2e, the signal RXS received from the one first-first electrode group 210G1.

According to one or more embodiments of the present invention, the sensor layer 200 may be driven in a mutual capacitance type, and thus a folding operation or an unfolding operation may be sensed. The transmission signal TXS may be provided to the second electrode group 220G, and the signal RXS may be output from the first-first electrode group 210G1. The grounded first-second electrode groups 210G2 may provide a touch (or an input).

A case in which the sensor layer 200 is changed from an unfolded state illustrated in FIG. 12A to a folded state illustrated in FIG. 12B will be described. The sensor driver 200C senses "Cm" in the unfolded state of the sensor layer 200. The sensor driver 200C takes this as a base line. The sensor driver 200C senses "Cm - dCm" in the folded state of the sensor layer 200. The sensor driver 200C calculates "(Cm) - (Cm - dCm) = dCm." In this case, "dCm" on the right side of the equal sign may be a folding detection signal.

A case in which the sensor layer 200 is changed from the folded state illustrated in FIG. 12B to the unfolded state illustrated in FIG. 12A will be described. The sensor driver 200C senses "Cm - dCm" in the folded state of the sensor layer 200. The sensor driver 200C takes this as a base line. The sensor driver 200C senses "Cm" in the unfolded state of the sensor layer 200. The sensor driver 200C calculates "(Cm - dCm) - (Cm) = -dCm." In this case, "-dCm" on the right side of the equal sign may be an unfolding detection signal.

In the sensor layer 200 driven in the mutual capacitance type by the single-ended analog front end, the number of nodes that sense folding is increased as the number of channels of the first-first electrode groups 210G1 driven for signal reception and the number of channels of the second electrode groups 220G driven for signal transmission are increased. In addition, as the number of grounded first-second electrode groups 210G2 of the sensor layer 200 is increased, the number of nodes touched is increased. As the number of nodes is increased, whether the sensor layer 200 is folded may be suitably determined.

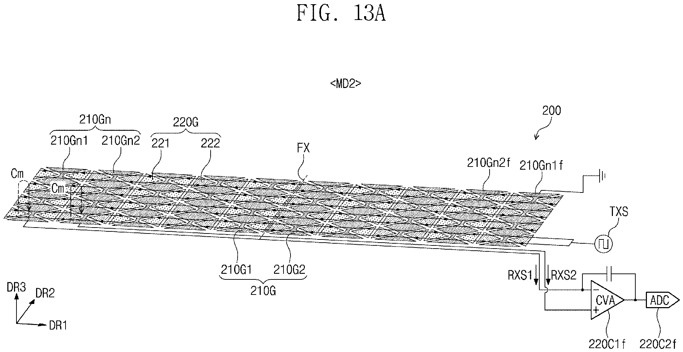

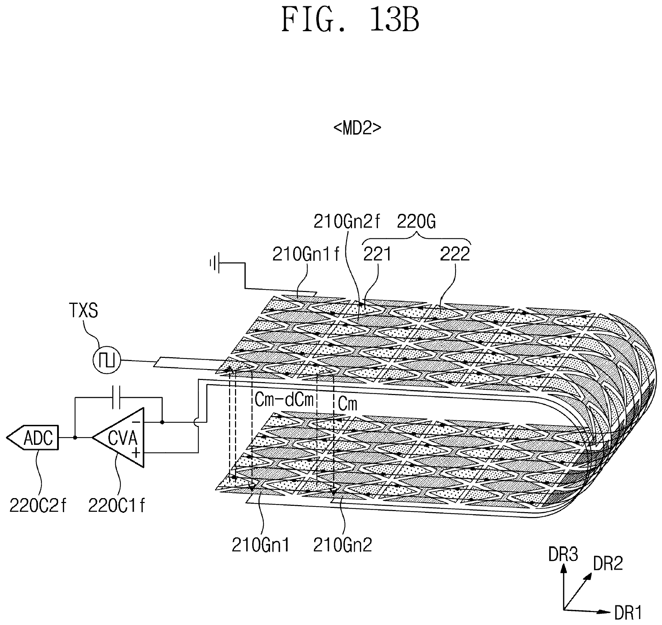

FIG. 13A is a view for explaining an operation of the sensor layer 200 according to one or more embodiments of the present invention. FIG. 13B is a view for explaining an operation of the sensor layer 200 according to one or more embodiments of the present invention.

Referring to FIGS. 2, 13A, and 13B, the display layer 100 and the sensor layer 200 may be folded and unfolded about the folding axis FX extending in the second direction DR2. The plurality of first electrode groups 210G may include a plurality of first-first electrode groups 210G1 and a plurality of first-second electrode groups 210G2 spaced apart from each other with the folding axis FX therebetween.

In the second mode MD2, the sensor driver 200C may output transmission signals TXS to at least some of the second electrode groups 220G. For example, the same transmission signal TXS may be provided to both the first electrode 221 and the second electrode 222 included in one second electrode group 220G. Accordingly, it may be substantially the same as including two electrodes in one sensing unit SU in the second mode MD2. In one or more embodiments of the present invention, all channels of the second electrode groups 220G may be driven for signal transmission, or only some channels of the second electrode groups 220G may be driven for signal transmission.

In the second mode MD2, one first-first electrode group 210Gn1 and the other first-first electrode group 210Gn2, which are included in two first-first electrode groups 210Gn that are adjacent to each other among the plurality of first-first electrode groups 210G1, may be driven for signal reception. For example, the one first-first electrode group 210Gn1 and the other first-first electrode group 210Gn2 may be paired with each other, and may be electrically connected to the same second analog front end 220C1f.

The second analog front end 220C1f may be a differential analog front end. The one first-first electrode group 210Gn1 may be electrically connected to an inverting terminal of a charge-to-voltage amplifier included in the second analog front end 220C1f, and the other first-first electrode group 210Gn2 may be electrically connected to a non-inverting terminal of the charge-to-voltage amplifier.

The second analog front end 220C1f may output, to an analog-to-digital converter 220C2f, a signal obtained by calculating a difference between a signal RXS1 received from the one first-first electrode group 210Gn1 and a signal RXS2 received from the other first-first electrode group 210Gn2.

In a state in which the sensor layer 200 is folded and in the second mode MD2, one of two first-second electrode groups 210G2 facing two first-first electrode groups 210G1 adjacent to each other may be grounded, and the other may not be grounded. For example, the other first-second electrode group 210Gn2f may be floated. The grounded one first-second electrode group 210Gn1f may provide a touch (or an input).

In an unfolded state of the sensor layer 200, the inverting terminal and the non-inverting terminal of the charge-to-voltage amplifier may receive "Cm," and the second analog front end 220C1f may output "0." In the folded state of the sensor layer 200, the first-first electrode group 210Gn1 facing the grounded one first-second electrode group 210Gn1f outputs "Cm - dCm," and the first-first electrode group 210Gn2 alternating with the other first-second electrode group 210Gn2f that is not grounded outputs "Cm." The inverting terminal of the charge-to-voltage amplifier of the second analog front end 220C1f receives "Cm - dCm," the non-inverting terminal of the charge-to-voltage amplifier receives "Cm," and the second analog front end 220C1f outputs "dCm." Accordingly, "dCm" may be a folding detection signal, and "0" may be an unfolding detection signal.

In the sensor layer 200 driven in the mutual capacitance type by the differential analog front end, the number of nodes that sense folding is increased as the number of channels of the first-first electrode groups 210G1, which are driven in pairs for signal reception, and the number of channels of the second electrode groups 220G, which are driven for signal transmission, are increased. As the number of nodes is increased, whether the sensor layer 200 is folded may be suitably determined.

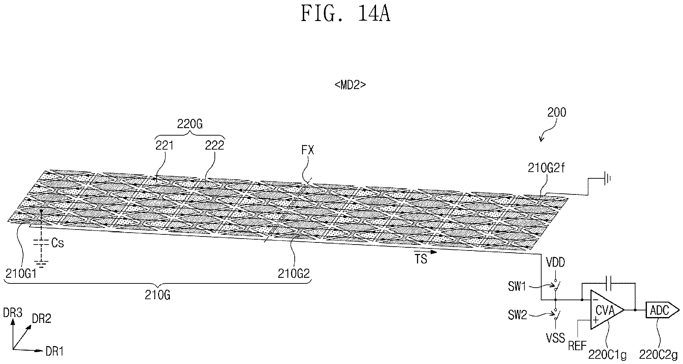

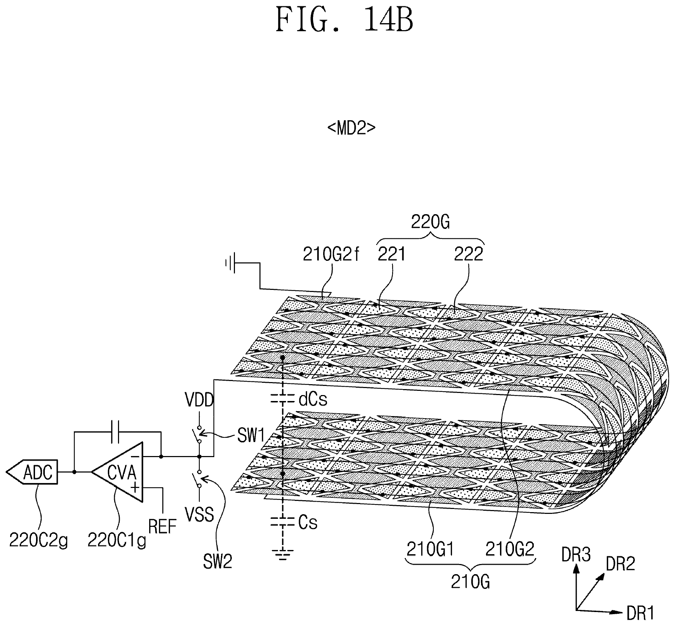

FIG. 14A is a view for explaining an operation of the sensor layer 200 according to one or more embodiments of the present invention. FIG. 14B is a view for explaining an operation of the sensor layer 200 according to one or more embodiments of the present invention.

Referring to FIGS. 2, 14A, and 14B, the display layer 100 and the sensor layer 200 may be folded and unfolded about the folding axis FX extending in the second direction DR2. The plurality of first electrode groups 210G may include a plurality of first-first electrode groups 210G1 and a plurality of first-second electrode groups 210G2 spaced apart from each other with the folding axis FX therebetween.

In the second mode MD2, one first-first electrode group 210G1 among the first-first electrode groups 210G1 may be electrically connected with a second analog front end 220C1g, and may output a signal TS to the second analog front end 220C1g. In the second mode MD2, the second electrode groups 220G may be grounded or floated.

In one or more embodiments of the present invention, the first-second electrode groups 210G2 may all be grounded. Alternatively, some of the first-second electrode groups 210G2 may be grounded, and the others may not be grounded. The second electrodes 222 may provide a touch (or an input). For example, among the first-second electrode groups 210G2, one first-second electrode group 210G2f facing the one first-first electrode group 210G1 may be grounded.

In the second mode MD2, a first switch SW1 and a second switch SW2 may be alternately turned on, and a first voltage VDD and a second voltage VSS may be alternately provided to the first-first electrode group 210G1. That is, a pulse signal may be provided to the first-first electrode group 210G1. Thereafter, the first-first electrode group 210G1 may output the signal TS to the second analog front end 220C1g. In the second mode MD2, the second analog front end 220C1g may output, to an analog-to-digital converter 220C2g, the signal TS received from the first-first electrode group 210G1.

The second analog front end 220C1g may be a single-ended analog front end. Accordingly, the first-first electrode group 210G1 may be connected to an inverting terminal of a charge-to-voltage amplifier included in the second analog front end 220C1g, and a reference voltage REF may be applied to a non-inverting terminal of the charge-to-voltage amplifier, or, instead, the non-inverting terminal of the charge-to-voltage amplifier may be grounded.

According to one or more embodiments of the present invention, the sensor layer 200 may be driven in a self-capacitance type, and thus a folding operation or an unfolding operation may be sensed. For example, the first-first electrode groups 210G1 may all be driven for signal transmission/reception, or, instead, only some of the first-first electrode groups 210G1 may be driven for signal transmission/reception.

A case in which the sensor layer 200 is changed from an unfolded state illustrated in FIG. 14A to a folded state illustrated in FIG. 14B will be described. In the unfolded state of the sensor layer 200, the sensor driver 200C senses "Cs" and takes this as a base line. In the folded state of the sensor layer 200, the sensor driver 200C senses "Cs + dCs." The sensor driver 200C calculates "(Cs + dCs) - (Cs) = dCs." In this case, "dCs" on the right side of the equal sign may be a folding detection signal.

A case in which the sensor layer 200 is changed from the folded state illustrated in FIG. 14B to the unfolded state illustrated in FIG. 14A will be described. In the folded state of the sensor layer 200, the sensor driver 200C senses "Cs + dCs." The sensor driver 200C takes this as a base line. In the unfolded state of the sensor layer 200, the sensor driver 200C senses "Cs." The sensor driver 200C calculates "(Cs) - (Cs + dCs) = -dCs." In this case, "-dCs" on the right side of the equal sign may be an unfolding detection signal.

In the sensor layer 200 driven in the self-capacitance type by the single-ended analog front end, the number of nodes that sense folding is increased as the number of channels of the first-first electrode group 210G1 driven for signal transmission/reception is increased. In addition, as the number of grounded or floated first-second electrode groups 210G2 is increased, the number of nodes that provide a touch is increased. As the number of nodes is increased, whether the sensor layer 200 is folded may be suitably determined. In one or more embodiments of the present invention, as the number of grounded first-second electrode groups 210G2 is decreased, the number of nodes that provide a touch may be decreased. However, the transmission/reception drive load of the sensor layer 200 driven in the self-capacitance type by the single-ended analog front end may be decreased.

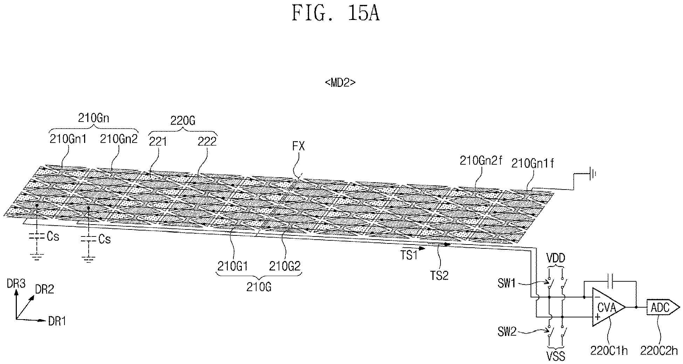

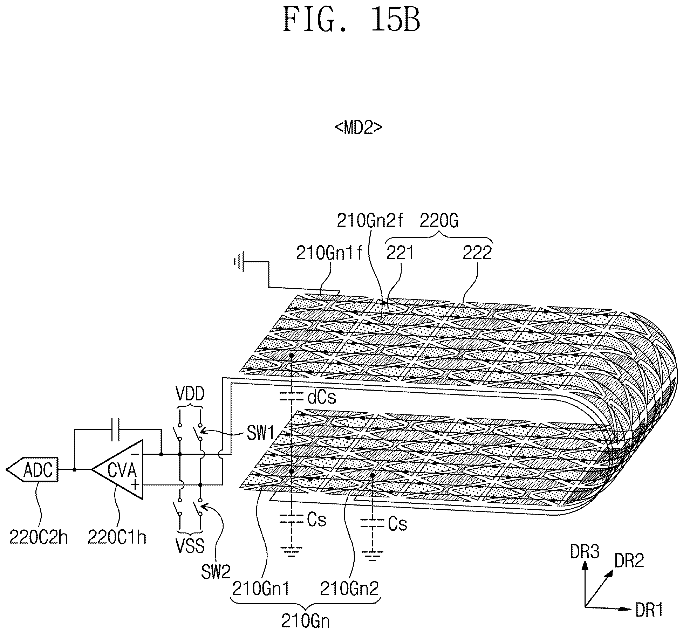

FIG. 15A is a view for explaining an operation of the sensor layer 200 according to one or more embodiments of the present invention. FIG. 15B is a view for explaining an operation of the sensor layer 200 according to one or more embodiments of the present invention.

Referring to FIGS. 2, 15A, and 15B, the display layer 100 and the sensor layer 200 may be folded and unfolded about the folding axis FX extending in the second direction DR2. The plurality of first electrode groups 210G may include a plurality of first-first electrode groups 210G1 and a plurality of first-second electrode groups 210G2 spaced apart from each other with the folding axis FX therebetween.

In the second mode MD2, one first-first electrode group 210Gn1 and the other first-first electrode group 210Gn2 included in two first-first electrode groups 210Gn adjacent to each other among the plurality of first-first electrode groups 210G1 may be driven for signal transmission/reception. For example, the one first-first electrode group 210Gn1 and the other first-first electrode group 210Gn2 may be paired with each other, and may be electrically connected to the same second analog front end 220C1h.

The second analog front end 220C1h may be a differential analog front end. The one first-first electrode group 210Gn1 may be electrically connected to an inverting terminal of a charge-to-voltage amplifier CVA included in the second analog front end 220C1h, and the other first-first electrode group 210Gn2 may be electrically connected to a non-inverting terminal of the charge-to-voltage amplifier.

In the second mode MD2, a first switch SW1 and a second switch SW2 may be alternately turned on, and a first voltage VDD and a second voltage VSS may be alternately provided to the two first-first electrode groups 210Gn adjacent to each other. That is, a pulse signal may be provided to the two first-first electrode groups 210Gn adjacent to each other. Thereafter, the one first-first electrode group 210Gn1 may output a signal TS1, and the other first-first electrode group 210Gn2 may output a signal TS2.

The second analog front end 220C1h may output, to an analog-to-digital converter 220C2h, a signal obtained by subtracting the signal TS1 received from the one first-first electrode group 210Gn1 and the signal TS2 received from the other first-first electrode group 210Gn2.

In the second mode MD2, one of two first-second electrode groups 210Gn1f and 210Gn2f facing the two first-first electrode groups 210Gn adjacent to each other may be grounded, and the other may not be grounded. For example, the other first-second electrode group 210Gn2f may be floated. The grounded one first-second electrode group 210Gn1f may provide a touch (or an input).

According to one or more embodiments of the present invention, the sensor layer 200 may be driven in a self-capacitance type, and thus a folding operation or an unfolding operation may be sensed. For example, the first-first electrode groups 210G1 may all be driven for signal transmission/reception, or, instead, only some of the first-first electrode groups 210G1 may be driven for signal transmission/reception.

According to one or more embodiments of the present invention, noise included in the signals TS1 and TS2 may be removed as one of the signal TS1 received from the one first-first electrode group 210Gn1 and the signal TS2 received from the other first-first electrode group 210Gn2 is subtracted from the other by the second analog front end 220C1h.

In an unfolded state of the sensor layer 200, the inverting terminal and the non-inverting terminal of the charge-to-voltage amplifier may receive "Cs," and the second analog front end 220C1h may output "0." In a folded state of the sensor layer 200, the one first-first electrode group 210Gn1 facing the grounded one first-second electrode group 210Gn1f outputs "Cs + dCs," and the other first-first electrode group 210Gn2 facing the other first-second electrode group 210Gn2f that is not grounded outputs "Cs." The inverting terminal of the charge-to-voltage amplifier of the second analog front end 220C1h receives "Cs + dCs," the non-inverting terminal of the charge-to-voltage amplifier receives "Cs," and the second analog front end 220C1h outputs "-dCs." Accordingly, "-dCs" may be a folding detection signal, and "0" may be an unfolding detection signal.

In the sensor layer 200 driven in the self-capacitance type by the differential analog front end, the number of nodes that sense folding is increased as the number of channels of the first-first electrode groups 210G1 driven in pairs for signal transmission/reception is increased. In addition, as the number of grounded first-second electrode groups 210G2 is increased, the number of nodes touched is increased. Accordingly, as the number of nodes is increased, whether the sensor layer 200 is folded may be suitably determined. In one or more embodiments of the present invention, as the number of grounded first-second electrode groups 210G2 is decreased, the number of nodes that provide a touch may be decreased. However, the transmission/reception drive load of the sensor layer 200 driven in the self-capacitance type by the differential analog front end may be decreased.

As described above, the sensor layer may sense not only coordinates for an external input but also a change of state of the electronic device, for example, a change from a folded state to an unfolded state or a change from the unfolded state to the folded state. Accordingly, a separate sensor for sensing folding may be omitted, and thus the manufacturing cost of the electronic device may be reduced.

In addition, one sensing unit defined in the sensor layer may include three electrodes. The sensor driver may transmit a signal to one electrode and may receive signals from two electrodes. The sensor driver may detect input coordinates based on an output signal obtained by subtracting the received signals. As one of the signals is subtracted from the other, noise included in the signals may be removed. Thus, the touch sensitivity of the electronic device may be improved.

## Claims

1. An electronic device (1000) comprising:
a display layer (100) in which a display region (100A), and a non-display region (100NA) adjacent to the display region (100A), are defined; and
a sensor layer (200) above the display layer (100) for selectively operating in a first mode (MD1) for sensing a touch, or in a second mode (MD2) for sensing folding of the display layer (100) and the sensor layer (200), and comprising:
first electrode groups (210G) arranged in a first direction (DR1); and
second electrode groups (220G) arranged in a second direction (DR2) crossing the first direction (DR1), and crossing the first electrode groups (210G),
wherein each of the second electrode groups (220G) comprises a first electrode (221) and a second electrode (222).

2. The electronic device (1000) of claim 1, wherein the first electrode (221) comprises first electrode patterns (221p) arranged in the first direction (DR1),
wherein the second electrode (222) comprises second electrode patterns (222p) arranged in the first direction (DR1), and
wherein the first electrode patterns (221p) and the second electrode patterns (222p) are arranged such that at least one first electrode pattern (221p) and at least one second electrode pattern (222p) alternate with each other.

3. The electronic device (1000) of claim 1 or 2, wherein the sensor layer (200) further comprises a first trace line (221t) electrically connected to the first electrode patterns (221p), and a second trace line (222t) electrically connected to the second electrode patterns (222p), and
wherein at least a portion of the first trace line (221t) and a portion of the second trace line (222t) overlap the display region (100A).

4. The electronic device (1000) of claim 3, wherein the at least the portion of the first trace line (221t) has substantially a same length as the at least the portion of the second trace line (222t).

5. The electronic device (1000) of at least one of claims 1 to 3, further comprising a sensor driver (200C) configured to drive the sensor layer (200), and comprising an analog front end (210C1) and an analog-to-digital converter (210C2).

6. The electronic device (1000) of claim 5, wherein, in the first mode (MD1), the sensor driver (200C) is configured to output a transmission signal (TXS) to the first electrode groups (210G), and the analog front end (210C1) is configured to output, to the analog-to-digital converter (210C2), a signal obtained by calculating a difference between a signal received from the first electrode (221) and a signal received from the second electrode (222).

7. The electronic device (1000) of claim 5, wherein, in the second mode (MD2):
the sensor driver (200C) is configured to output a transmission signal (TXS) to at least some of the first electrode groups (210G);
one of the first electrode (221) or the second electrode (222) is configured to output a signal to the analog front end (210C1), and an other one of the first electrode (221) or the second electrode (222) is grounded;
the analog front end (210C1) is configured to output, to the analog-to-digital converter (210C2), the signal received from the one of the first electrode (221) or the second electrode (222); and
a second electrode (222) in one of the second electrode groups (220G) that is not being driven for signal reception is configured to be grounded or electrically floated.

8. The electronic device (1000) of claim 5, wherein the display layer (100) and the sensor layer (200) are configured to be folded and unfolded about a folding axis (FX) extending in the second direction (DR2),
wherein the first electrode groups (210G) comprise first-first electrode groups (210G1) and first-second electrode groups (210G2) spaced apart from each other with the folding axis (FX) therebetween,
wherein, in the second mode (MD2):
the sensor driver (200C) is configured to output a transmission signal (TXS) to at least some of the first-first electrode groups (210G1);
at least some of the first-second electrode groups (210G2) are configured to be grounded; and
the analog front end (210C1) is configured to output, to the analog-to-digital converter (210C2), a signal obtained by calculating a difference between a signal received from the first electrode (221) and a signal received from the second electrode (222).

9. The electronic device (1000) of claim 5, wherein in the second mode (MD2):
the sensor driver (200C) is configured to output a transmission signal (TXS) to at least some of the first electrode groups (210G);
the analog front end (210C1) is configured to output, to the analog-to-digital converter (210C2), a signal obtained by calculating a difference between signals received from one first electrode (221) and an other first electrode (221) in two adjacent ones of the second electrode groups (220G);
one second electrode (222) of the two adjacent ones of the second electrode groups (220G) is configured to be grounded; and
an other second electrode (222) of the two adjacent ones of the second electrode groups (220G) is configured not to be grounded.

10. The electronic device (1000) of claim 5, wherein, in the second mode (MD2):
the first electrode groups (210G) are configured to be grounded or floated;
one of the first electrode (221) or the second electrode (222) is configured to output a signal to the analog front end (210C1);
an other one of the first electrode (221) or the second electrode (222) is configured to be grounded; and
the analog front end (210C1) is configured to output, to the analog-to-digital converter (210C2), the signal received from the one of the first electrode (221) or the second electrode (222).

11. The electronic device (1000) of claim 5, wherein, in the second mode (MD2):
the first electrode groups (210G) are configured to be grounded or floated;
the analog front end (210C1) is configured to output, to the analog-to-digital converter (210C2), a signal obtained by calculating a difference between signals received from one first electrode (221) and an other first electrode (221) of two adjacent ones of the second electrode groups (220G);
one second electrode (222) of the two adjacent ones of the second electrode groups (220G) is configured to be grounded; and
an other second electrode (222) of the two adjacent ones of the second electrode groups (220G) is configured not to be grounded.

12. The electronic device (1000) of claim 5, wherein the display layer (100) and the sensor layer (200) are configured to be folded and unfolded about a folding axis (FX) extending in the second direction (DR2),
wherein the first electrode groups (210G) comprise first-first electrode groups (210G1) and first-second electrode groups (210G2) spaced apart from each other with the folding axis (FX) therebetween,
wherein, in the second mode (MD2):
the sensor driver (200C) is configured to output a transmission signal (TXS) to at least some of the second electrode groups (220G);
at least one first-first electrode group (210G1) among the first-first electrode groups (210G1) is configured to output a signal to the analog front end (210C1);
the analog front end (210C1) is configured to output, to the analog-to-digital converter (210C2), the signal received from the at least one first-first electrode group (210G1); and
at least some of the first-second electrode groups (220G) are configured to be grounded.

13. The electronic device (1000) of claim 5, wherein the display layer (100) and the sensor layer (200) are configured to be folded and unfolded about a folding axis (FX) extending in the second direction (DR2),
wherein the first electrode groups (210G) comprise first-first electrode groups (210G1) and first-second electrode groups (210G2) spaced apart from each other with the folding axis (FX) therebetween,
wherein, in the second mode (MD2):
the sensor driver (200C) is configured to output a transmission signal (TXS) to at least some of the second electrode groups (220G);
the analog front end (210C1) is configured to output, to the analog-to-digital converter (210C2), a signal obtained by calculating a difference between signals received from two adjacent ones of the first-first electrode groups (210G1); and
in a state in which the display layer (100) and the sensor layer (200) are folded, one of two adjacent ones of the first-second electrode groups (210G2) configured to face the two adjacent ones of the first-first electrode groups (210G1) is configured to be grounded, and an other one of the two adjacent ones of the first-second electrode groups (210G2) is configured not to be grounded.

14. The electronic device (1000) of claim 5, wherein the display layer (100) and the sensor layer (200) are configured to be folded and unfolded about a folding axis (FX) extending in the second direction (DR2),
wherein the first electrode groups (210G) comprise first-first electrode groups (210G1) and first-second electrode groups (210G2) spaced apart from each other with the folding axis (FX) therebetween,
wherein, in the second mode (MD2):
the second electrode groups (220G) are configured to be grounded or floated; and
one of the first-first electrode groups (210G1) is configured to output a signal to the analog front end (210C1), and one of the first-second electrode groups (210G2) configured to face the one of the first-first electrode groups (210G1) is configured to be grounded.

15. The electronic device (1000) of claim 5, wherein the display layer (100) and the sensor layer (200) are configured to be folded and unfolded about a folding axis (FX) extending in the second direction (DR2),
wherein the first electrode groups (210G) comprise first-first electrode groups (210G1) and first-second electrode groups (210G2) spaced apart from each other with the folding axis (FX) therebetween,
wherein, in the second mode (MD2):
the second electrode groups (220G) are configured to be grounded or floated;
the analog front end (210C1) is configured to output, to the analog-to-digital converter (210C2), a signal obtained by calculating a difference between signals received from two adjacent ones of the first-first electrode groups (210G1); and
in a state in which the display layer (100) and the sensor layer (200) are folded, one of two of the first-second electrode groups (210G2) configured to face two adjacent ones of the first-first electrode groups (210G1) is configured to be grounded, and an other of the two of the first-second electrode groups (210G2) is configured not to be grounded.
